# DEMANDE DE BREVET EUROPEEN

(11) **EP 3 306 012 A1**
(43) Date de publication de la demande: **11.04.2018**
(21) Numéro de dépôt: 17194426.7
(22) Date de dépôt: 02.10.2017
(51) Int. Cl.: E04G 15/06, H02G 3/18, E04G 9/08

(54) **BOÎTE DE RÉSERVATION AUTOBLOQUANTE ET SON PROCÉDÉ D'UTILISATION**

(30) Priorité: 05.10.2016 FR 1659615
(71) Demandeur: SIIB France, 63800 Cournon d'Auvergne (FR)
(72) Inventeur: AUCOUTURIER, René, 63140 Châtel-Guyon (FR)
(74) Mandataire: Dennemeyer & Associates S.A.

(57) **Abrégé**

Cette boîte de réservation, polyédrique à base carrée, rectangulaire ou hexagonale, comprend des panneaux latéraux définissant les côtés (3 à 5) de la boite, un panneau de fond (7) et un couvercle, cette boîte délimitant un espace de passage (V) d'au moins une gaine et/ou conduit technique dans une dalle (8) ou une paroi en béton (10), au moins deux panneaux latéraux définissant deux côtés (3 et 4) opposés de la boite n'étant pas parallèles, la distance la plus faible entre lesdits panneaux (3 et 4) étant située au niveau de la liaison entre lesdits panneaux (3 et 4) et le panneau de fond (7). Tous les panneaux latéraux de la boite de réservation formant deux côtés opposés (3 et 4) ne sont pas parallèles et l'angle, formé par deux panneaux formant deux côtés opposés (3 et 4) de la boite, est compris 3° et 60°.L'invention concerne également un procédé d'utilisation de la boîte.

## Description

La présente invention concerne une boîte de réservation autobloquante ainsi que son procédé d'utilisation.

Une boîte de réservation est une boîte de forme géométrique variée, généralement carrée ou rectangulaire, voire hexagonale, dont le volume intérieur est propre à délimiter un espace dans une dalle de béton ou une paroi, préfabriquées ou non, pour recevoir au moins une gaine dans laquelle est inséré un conduit technique destiné à véhiculer de l'électricité ou des fluides, c'est-à-dire un tuyau, métallique ou en polymère, dans lequel circule un liquide ou un gaz. Il est connu de réaliser de telles boîtes soit par assemblage de panneaux en un matériau rigide soit par pliage d'un matériau souple, par exemple un matériau alvéolaire.

Une boîte de réservation permet la mise en attente des gaines et conduits dans le volume intérieur de la boîte de réservation, pour une reprise ultérieure. L'introduction se fait par un ou plusieurs orifices, ou prédécoupes, réalisés dans les parois latérales ou de fond de la boîte. Une telle configuration permet de positionner les gaines et conduits sur une dalle ou une paroi avant le coulage du béton, à savoir en posant, par exemple, les gaines et conduits sur un treillis métallique constitutif de la dalle en béton. On introduit aisément au moins une gaine ou un conduit dans la boîte de réservation. Une fois que le béton est coulé, il recouvre alors totalement les gaines et/ou les conduits, sur une épaisseur adaptée pour assurer la protection des gaines et/ou conduits. Le béton recouvre également les parois de la boîte de réservation, à l'exception du couvercle de celle-ci pour permettre un accès ultérieur à son volume intérieur qui, lui, reste libre de béton à ce stade. Une fois la reprise des gaines et/ou conduits effectuée, il convient de combler le volume correspondant à la boite, afin d'obtenir une dalle pleine, sans zone vide de béton. Pour cela, on décoffre la boite. Le béton est alors coulé et assure la liaison avec le béton déjà coulé.

Une telle solution est fastidieuse et relativement longue à réaliser lorsqu'il y a plusieurs boites de réservation en place dans une même dalle. De plus, il arrive que l'adhérence des parois de la boite avec le béton soit telle que le décoffrage est malaisé. On connait par EP-A-2067910 une boite de réservation qui reste en place dans la dalle de béton lors du coulage du béton, en tant que coffrage perdu une fois les gaines et conduits en place dans la boite. Néanmoins l'utilisation d'une telle boite n'est pas optimale.

L'invention propose une boîte de réservation améliorée, d'une mise en oeuvre simplifiées, facilitant la mise en oeuvre du béton et limitant la durée des opérations postérieures au passage des gaines et/ou conduits dans la boîte.

A cet effet, l'invention a pour objet une boîte de réservation, polyédrique à base carrée, rectangulaire ou hexagonale, comprenant des panneaux latéraux définissant les côtés de la boite, un panneau de fond et un couvercle, cette boîte délimitant un espace de passage d'au moins une gaine et/ou conduit technique dans une dalle ou une paroi en béton, au moins deux panneaux latéraux définissant deux côtés opposés de la boite n'étant pas parallèles, la distance la plus faible entre lesdits panneaux étant située au niveau de la liaison entre lesdits panneaux et le panneau de fond de la boite, caractérisée en ce que tous les panneaux latéraux de la boite de réservation formant deux côtés opposés ne sont pas parallèles et en ce que l'angle, formé par deux panneaux formant deux côtés opposés de la boite, est compris 3° et 60°.

Ainsi, la forme de la boite est globalement en forme de coin ou de clef de voute. Une telle forme implique que la boite, lorsqu'elle est en place dans une dalle de béton, ou une paroi, est dite autobloquante. En d'autres termes, elle ne peut pas se déplacer verticalement sous l'effet de son propre poids et de celui des gaines et/ou conduits. De cette manière, il n'est plus nécessaire de décoffrer la boite avant de couler le béton autour des gaines et/ou conduits. La boite reste en place et forme un coffrage perdu. L'utilisateur n'effectue plus de décoffrage, d'où un gain de temps. Par ailleurs, il est possible de couler du béton dans le volume de la boite rapidement, sans attendre obligatoirement que le béton de la dalle, autour de la boite, soit sec.

Selon des aspects avantageux mais non obligatoires de l'invention, une telle boîte peut comprendre une ou plusieurs des caractéristiques suivantes:
- l'angle, formé par deux panneaux formant deux côtés opposés de la boite, est compris entre 3° et 6°.
- Les panneaux sont en un matériau alvéolaire expansé à base de polymères choisi parmi le polypropylène (PP), le polyéthylène (PE), le chlorure de polyvinyle (PVC), le polystyrène (PSE) haute densité.

L'invention concerne également un procédé d'utilisation d'une boîte de réservation dans une dalle de béton, conforme à l'une quelconque des caractéristiques précédentes, caractérisé en ce qu'il comprend au moins les étapes suivantes :
- a) on positionne la boite de réservation sur le coffrage de la dalle, à l'emplacement du passage des conduits et gaines,
- b) on coule la dalle, le béton étant en contact avec l'ensemble des faces externes de la boite et de son fond,
- c) on ôte le couvercle de la boite afin d'accéder à son volume interne vide,
- d) on insère les conduits et gaines dans la boite à partir de la face externe du fond, par des ouvertures ménagées dans le fond, de sorte que les extrémités des conduits et gaines s'étendent au-delà de la face supérieure visible de la dalle et
- e) on coule du matériau de remplissage dans le volume interne de la boite.

Selon des aspects avantageux mais non obligatoires de l'invention, un tel procédé peut comprendre une ou plusieurs des étapes suivantes:
- lors de l'étape e), le matériau de remplissage est choisi parmi du béton, une mousse intumescente, du béton de mousse ou du béton de bois.
- On effectue l'étape e) sans attendre que le béton coulé autour de la boite soit totalement sec.
- Lors de l'étape e), on s'assure que le béton est en contact avec l'ensemble des faces internes des panneaux latéraux et du fond de la boite.

L'invention sera mieux comprise et d'autres avantages de celle-ci apparaitront plus clairement à la lecture de la description qui va suivre, donnée à titre d'exemple non limitatif et faite en référence aux dessins suivants dans lesquels:
- La figure 1 est une vue en perspective d'une boîte conforme à un mode de réalisation de l'invention, prête à l'emploi, avant sa mise en place dans une dalle,
- la figure 2 est une vue en coupe, à la même échelle, de la boîte de la figure 1, sans son couvercle et sans une des parois latérales, en position dans une dalle de béton partiellement illustrée, et
- les figures 3 et 4 sont respectivement des vues similaires à la figure 2, illustrant, schématiquement, le passage des conduits et des gaines dans la boite et le coulage du béton dans celle-ci.

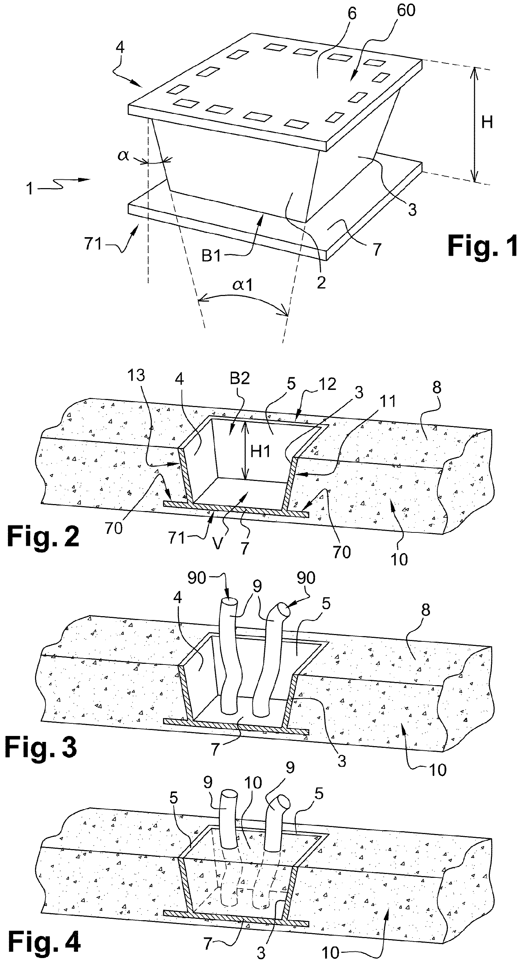

La figure 1 illustre une boîte de réservation 1, conforme à l'invention, avant son utilisation. Elle se présente sous la forme d'un polyèdre tronconique à base carrée. En variante, la base est rectangulaire ou hexagonale. La boite 1 est, avantageusement, réalisée en un matériau résistant aux intempéries et inerte vis-à-vis du béton. Ce matériau est, par exemple, un matériau alvéolaire expansé à base de polymères, c'est-à-dire avec une structure en nid d'abeilles. Un tel matériau est, avantageusement, choisi parmi le polypropylène (PP), le polyéthylène (PE), le chlorure de polyvinyle (PVC), le polystyrène (PSE) haute densité. Dans d'autres modes de réalisation, on utilise un autre matériau tel que du bois, un autre polymère, un métal ou un alliage métallique.

Les boîtes de réservation ont différentes formes et dimensions, étant entendu que l'invention s'applique particulièrement aux boîtes à base carrée ou rectangulaire, par exemple des boites de 30 cm par 30 cm de côté sur 20 cm de haut.

La figure 1 illustre une boîte 1 à base carrée, étant entendu que l'invention concerne toutes dimensions de boîtes de réservation, à base carrée ou rectangulaire. La boite 1 est réalisée par pliage en plusieurs panneaux d'une bande de matériau alvéolaire. Les panneaux 2, 3, 4 et 5 définissent ainsi les côtés de la boite 1.

Un panneau 6, de forme carrée, forme le couvercle de la boîte de réservation 1. Le couvercle 6 est maintenu en place sur les extrémités supérieures, en regardant la figure 1, des côtés 2 à 5 par une liaison amovible. En l'espèce, de façon connue en soi, des ergots situés sur les côtés 2 à 5 sont insérés en force dans des fentes de forme complémentaires réalisées dans le couvercle 6.

Un panneau 7 forme le fond de la boite de réservation 1. Le fond 7 est de forme carrée, ses dimensions étant supérieures à celles de la petite base B1 de la boite 1, définie par les extrémités des panneaux 2 à 5 au niveau de leurs zones de liaison avec le fond 7.

Comme cela ressort de la figure 1, le couvercle 6 a également des dimensions supérieures à celles de la grande base B2 de la boite 1. La base B2 définit l'ouverture d'accès au volume interne V de la boite 1, lorsque le couvercle 6 est enlevé. En d'autres termes, le couvercle 6 et le fond 7 s'étendent, chacun, au-delà des bases B1 et B2 de la boite 1 définies par les côtés 2 à 5 de la boite 1. Dans l'exemple, le fond 7 a des dimensions supérieures au couvercle 6, de sorte à ce que le fond 7 définit un socle d'une surface supérieure à celle du couvercle 6. Dans d'autres modes de réalisation non illustrés, le fond 7 a des dimensions égales à celles du couvercle 6.

La hauteur totale H de la boite 1 est définie entre la face visible 60 du couvercle 6 et la face externe 70 du fond 7. La hauteur utile H1 de la boite 1 est définie par la distance séparant les plans parallèles dans lesquels se trouvent les bases B1 et B2. En d'autres termes, la hauteur H1 est sensiblement égale à la hauteur des côtés 2 à 5. Le volume interne V est délimité par les bases B1, B2 et la hauteur H1.

Comme cela apparait aux différentes figures, l'écart dimensionnel entre les bases B1 et B2 implique que les panneaux constitutifs des côtés 2 à 5 de la boite 1 sont inclinés par rapport à la verticale. L'angle d'inclinaison α est généralement compris entre 1° et 30°. L'angle α est identique pour tous les côtés 2 à 5. En variante, il est différent pour au moins deux côtés. Dans le mode de réalisation, préféré, illustré aux différentes figures, un angle d'inclinaison α identique pour tous les côtés permet de définir une boite 1 dont deux côtés opposés 2, 5 et 3, 4 sont disposés angulairement, donc ne sont pas parallèles entre eux. L'angle α1 formé par deux côtés opposés non parallèles est compris entre 3° et 60°. Avantageusement, l'angle α1 formé par deux côtés opposés non parallèles est compris entre 3° et 6°.

Ainsi, la boite 1 est en forme de polyèdre tronconique à base carrée, rectangulaire ou hexagonale. En d'autres termes, la boite 1 a une forme de coin ou de pyramide tronquée. Une telle configuration géométrique induit un comportement de la boite 1 similaire à celui d'une clef de voûte lorsque la boite 1 est en place dans une dalle horizontale 8, comme illustrée aux figures 2 à 4.

La mise en place et l'utilisation de la boite 1 sont maintenant décrites en référence aux figures 2 à 4. Dans une première étape, on positionne la boite 1 sur le coffrage de la dalle, par exemple sur le treillis métallique sur lequel sera coulée la dalle en béton. Cette première étape, connue en soi et non représentée, est effectuée de sorte que le fond 7 de la boite 1 se trouve sensiblement à l'aplomb de la zone de passage prévue pour des conduits et gaines techniques, schématiquement représentés par la référence 9 aux figures 3 et 4.

Une fois la boite 1 en place, on coule le béton 10 constitutif de la dalle 8. Le béton 10 est en contact avec la totalité des faces externes 11 à 13 des côtés 2 à 5 de la boite 1. Ici, pour faciliter la lecture, la dalle 8 et la boite 1 sont illustrées en coupe, aux figures 2 à 4, le plan de coupe passant par le côté 2 qui n'est pas représenté.

Lorsque la boite 1 est en place dans la dalle 8, le béton est également en contact avec la partie périphérique 70 du fond 7 qui s'entend vers l'extérieur de la boite 1, au-delà de la base B1. La présence du béton sur cette partie 70 assure un ancrage optimal de la boite dans la dalle 8, la partie 70 formant une patte d'ancrage dans le béton 10. On note par ailleurs que la face externe 71 du fond 7 est recouverte également par le béton. Ainsi, une fois le béton 10 coulé, seul le couvercle 6 est visible et accessible.

L'utilisateur, dans une étape suivante, assure le passage des conduits techniques 9 à travers le fond 7, avantageusement par des prédécoupes ménagées dans le fond 7. Les conduits 9 sont passés dans le volume V de la boite 1, de sorte que leurs extrémités ouvertes 90 se situent au-dessus de la grande base B2. Dans cette configuration, les conduits 9 s'étendent au-dessus de la dalle 8 d'une longueur suffisante pour permettre leur reprise lors de la suite des travaux.

L'étape suivante consiste à couler un matériau de remplissage dans le volume V de la boite 1. Un tel matériau est choisi pour présenter, en soi, au minimum une résistance élevée au feu. De manière préférée, le matériau de remplissage présente des caractéristiques rendant son inflammabilité faible. Un tel matériau de remplissage est, par exemple, choisi parmi du béton, une mouse intumescente, du béton de mousse ou du béton de bois. Le choix du matériau tient compte de l'aspect final de la dalle ou de la paroi. Ici, comme illustré à la figure 4, le matériau choisi est du béton 10 que l'on coule dans le volume V de la boite 1. Cette opération est réalisée sans qu'il soit nécessaire de décoffrer la boite 1 et sans qu'il soit nécessaire d'attendre le séchage complet du béton 10. En d'autres termes, lors de cette étape, la boite 1 forme un coffrage perdu pour le coulage du matériau de remplissage dans le volume V. La forme tronconique de la boite 1 assure le maintien en position de cette dernière, sans que le poids du matériau de remplissage, ici du béton 10, introduit dans le volume V provoque le déplacement vers le bas, voir la sortie de la boite 1 hors de la dalle 8. La forme de la boite 1 assure un auto-blocage en position, par un effet clef de voute. Il est ainsi aisé de réaliser rapidement le passage des conduits 9 dans la boite 1 et la finition de la dalle 8.

Par ailleurs, la présence de la boite 1 dans la dalle 8 ne modifie en rien les caractéristiques de résistance mécanique de cette dernière ni la tenue au feu. En effet, des essais ont montrés que lorsque le feu se propage à partir de la face inférieure de la dalle 8, la combustion du matériau constitutif de la boite 1 est limitée et dans tous les cas très lente. Un dégagement de fumée a été observé sur la face supérieure de la dalle 8 après 3H, un feu étant maintenu sur la face inférieure pendant ce temps. Cette tenue au feu, même si le matériau constitutif de la boite est inflammable est due au fait que l'adhérence du matériau de remplissage, ici du béton 10, sur les faces interne et externe des côtés 2 à 5 empêchent toute arrivée d'oxygène, ce qui limite de manière importante la combustion, si ce n'est rend cette dernière impossible. De plus, lorsque la température du matériau constitutif de la boite 1 est voisine de la température de fusion de ce matériau, par exemple 130°C pour du polypropylène, le matériau alvéolaire se déforme en fondant et passe de l'état solide à l'état pâteux. Le matériau constitutif des parois de la boite agit alors comme un bouchon, en occupant tout l'espace disponible, sans ménager de passage pour l'air. Ces comportements au feu ont également été observés lorsque le matériau de remplissage est de la mousse intumescente ou un autre matériau tel que cité précédemment. En d'autres termes, une tenue au feu en accord avec la réglementation applicable actuellement a été observée lorsque la boite 1 est laissée en place dans la dalle. Ceci a été constaté de manière surprenante par le demandeur, et va à l'encontre de la pratique habituelle qui est de décoffrer la boite 1, l'homme du métier estimant que sa présence nuisait à la tenue au feu de la dalle. Ainsi, même lorsque le phénomène de combustion apparait, on observe, au minimum, une autolimitation de ce dernier, sous l'effet de la déformation du matériau.

Grâce à l'invention, on peut laisser en place les boites de réservation dans une dalle de béton, avec un temps de mise en oeuvre amélioré tout en préservant les caractéristiques de tenue au feu de la dalle. On conçoit que, en variante, la boite est réalisée en un matériau en lui-même ininflammable.

## Revendications

1. Boîte de réservation (1), polyédrique à base carrée, rectangulaire ou hexagonale, comprenant des panneaux latéraux définissant les côtés (2 à 5) de la boite (1), un panneau de fond (7) et un couvercle (6), cette boîte (1) délimitant un espace de passage (V) d'au moins une gaine et/ou conduit technique (9) dans une dalle (8) ou une paroi en béton (10), au moins deux panneaux latéraux définissant deux côtés (2 et 5, 3 et 4) opposés de la boite (1) n'étant pas parallèles (α1), la distance la plus faible entre lesdits panneaux (2 et 5, 3 et 4) étant située au niveau de la liaison entre lesdits panneaux (2 et 5, 3 et 4) et le panneau de fond (7) de la boite (1), **caractérisée en ce que** tous les panneaux latéraux de la boite de réservation formant deux côtés opposés (2 et 5, 3 et 4) ne sont pas parallèles et **en ce que** l'angle (α1), formé par deux panneaux formant deux côtés opposés (2 et 5, 3 et 4) de la boite (1), est compris 3° et 60°.

2. Boîte selon la revendication 1, **caractérisée en ce que** l'angle (α1), formé par deux panneaux formant deux côtés opposés (2 et 5, 3 et 4) de la boite (1), est compris entre 3° et 6°.

3. Boîte selon la revendication 1 ou 2, **caractérisée en ce que** les panneaux (2 à 5, 6, 7) sont en un matériau alvéolaire expansé à base de polymères choisi parmi le polypropylène (PP), le polyéthylène (PE), le chlorure de polyvinyle (PVC), le polystyrène (PSE) haute densité.

4. Procédé de montage d'une boîte de réservation (1) dans une dalle (8) de béton (10), selon l'une des revendications précédentes, **caractérisé en ce qu'**il comprend au moins les étapes suivantes :
- a) on positionne la boite de réservation (1) sur le coffrage de la dalle, à l'emplacement du passage des conduits et gaines (9),
- b) on coule la dalle (8), le béton (10) étant en contact avec l'ensemble des faces externes (11 à 13, 70, 71) de la boite (1) et de son fond (7),
- c) on ôte le couvercle (6) de la boite (1) afin d'accéder à son volume interne (V) vide,
- d) on insère les conduits et gaines (9) dans la boite (1) à partir de la face externe (71) du fond (7), par des ouvertures ménagées dans le fond, de sorte que les extrémités (90) des conduits et gaines (9) s'étendent au-delà de la face supérieure visible de la dalle et
- e) on coule du matériau de remplissage (10) dans le volume interne (V) de la boite (1).

5. Procédé de montage d'une boîte de réservation selon la revendication 4, **caractérisé en ce que** lors de l'étape e), le matériau de remplissage est choisi parmi du béton (10), une mousse intumescente, du béton de mousse ou du béton de bois.

6. Procédé de montage d'une boîte de réservation selon la revendication 4 ou 5, **caractérisé en ce qu'**on effectue l'étape e) sans attendre que le béton (10) coulé autour de la boite (1) soit totalement sec.

7. Procédé de montage d'une boîte de réservation selon la revendication 4, **caractérisé en ce que** lors de l'étape e), on s'assure que le béton est en contact avec l'ensemble des faces internes des panneaux latéraux et du fond de la boite.
